## Europäisches Patentamt

## European Patent Office

## Office européen des brevets

(19)

(11) **EP 1 615 122 A1**

(12) **EUROPEAN PATENT APPLICATION**

(43) Date of publication:
**11.01.2006 Bulletin 2006/02**

(51) Int Cl.:
*G06F 7/556* (2006.01)

(21) Application number: **04016025.1**

(22) Date of filing: **07.07.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | • **Pfleiderer, Hans-Jörg**<br>**89075 Ulm (DE)**<br>• **Heer, Christoph**<br>**85579 Neubiberg (DE)** |
| (71) Applicant: **Infineon Technologies AG**<br>**81669 München (DE)** | (74) Representative: **Lange, Thomas**<br>**Patentanwälte**<br>**Lambsdorff & Lange**<br>**Dingolfinger Strasse 6**<br>**81673 München (DE)** |
| (72) Inventors:<br>• **Layer, Christophe**<br>**89073 Ulm (DE)** | |

(54) **Device for computing the logarithm of a binary value**

(57) The invention provides a device for computing the logarithm of a binary input value (x) to the base of 2, wherein a range of input values (x) of a logarithmic function of the logarithm is subdivided into a plurality of intervals, and the device in a respective interval computes an output value (y) of the logarithm based on an approximation of the logarithmic function by a respective straight line, comprising a bit shifter (16) for inverting bits of the input value and for shifting the bits of the input value n positions to the left, and a counter (2, 6) for generating an offset of the input value (x) within n counting cycles, wherein the bit shifter (16) outputs the i-2 least significant bits of the output value (y), and the counter (2, 6) outputs the upper bits of the output value (y).

FIG 8

## Description

The present invention relates to the computation of the logarithm of an integer. In particular, the invention relates to a device for computing the logarithm of a binary input value to the base of 2.

In digital signal processing, sensor technology, image processing, digital correction methods, searching algorithms etc. the computation of the logarithm of an integer is often needed. The computation of logarithms facilitates the calculation of polynoms, roots and powers and is applicable in integer or fixed-point arithmetic.

At present the computation of logarithms is performed with general purpose processors, complex look-up tables or read-only memories (ROM).

One disadvantage of the known solutions for the computation of logarithms is the requirement of a very high number of logic gates, the low speed of computation and the limited processible word lengths.

An object of the present invention is to provide a device for computing the logarithm of a binary input value, which is simple and fast and is able to process input values of any word length.

This object is achieved by a device according to claim 1.

The basic idea of the invention is to approximate a logarithm by segments of straight lines in intervals of an associated logarithmic function and advantageously select the size of the intervals or the subdivision of the ranges of the input and output values of the logarithmic function to reduce the complexity of the device used for computing the logarithm.

The invention relates to a device for computing the logarithm of a binary input value x to the base of 2, wherein a range of input values of a logarithmic function of the logarithm is subdivided into a plurality of intervals, and the device in a respective interval computes an output value y of the logarithm based on an approximation of the logarithmic function by a respective straight line, and wherein in each interval (n) a straight line is described by the equation $y_{n,i}(x) = -2^n \cdot (x + 1) + 2^{i-1} \cdot (n + 2)$ in dependence on the number of bits i of the input value x. Each interval is denoted by a respective parameter n. The device comprises a bit shifter for inverting bits of the input value and for shifting the bits of the input value n positions to the left, and a counter for generating an offset $+ 2^{i-1} \cdot (n + 2)$ of the input value x within n counting cycles, wherein the bit shifter outputs the i-1 least significant bits of the output value y, and the counter outputs the upper bits of the output value.

An advantage of the device according to the invention is that values of any word length can be processed.

A further advantage of the device according to the invention is that due to the way of approximating a logarithmic function based on straight lines having simple slopes the device of the invention is easily implemented in hardware and only requires a small number of logic gates.

A further advantage of the device according to the invention is that through its repeated internal structure, the device is easily scalable and also optimized for integration in small areas.

In the dependent claims advantageous developments and improvements of the device according to claim 1 are found.

According to a preferred development of the device according to the invention the bit shifter is a serial bit shifter, and the shifting of the bit shifter and the counting cycles of the counter are controlled by a clock signal.

One advantage of this further development is that the device can be operated with an extremely high clock frequency e.g. of several hundred MHz, and that the clock frequency only depends on the technology used and not on the width of the input value.

According to a further development of the device the bit shifter comprises a row of multiplexers with a feedback.

According to a further development of the device the device further comprises a first bit inverter for inverting the bits of the input value, and a second bit inverter for inverting the bits of the output value, wherein the first bit inverter and the second bit inverter invert the bits in dependence on a selection signal indicating a logarithmic function used for computing the logarithm.

One advantage of this further development is that in the device only an absolutely necessary hardware is implemented instead of separate computing units for computing separate logarithmic functions.

According to a further development of the device the first bit inverter and the second bit inverter comprise EXLUSIVE-OR gates.

According to a further development of the device the device further comprises an error corrector for correcting the error caused by the approximation of the logarithmic function.

Preferred embodiments of the present invention are shown in the accompanying drawings, in which:

Fig. 1 shows a device for computing the logarithm of a value to the base of 2 according to the invention;

Fig. 2 shows four different analog logarithmic functions that may be used in the device of Fig. 1;

Fig. 3 shows a logarithmic function and the piecewise linear approximation of the logarithmic function by straight lines;

Fig. 4 shows a piecewise linear approximation of a logarithmic function;

Fig. 5 shows the piecewise linear approximation of a logarithmic function for different widths of the input value;

Fig. 6 shows an analog logarithmic function in comparison to a non-linear function approximating the logarithmic function;

Fig. 7 shows the relative error made by the piecewise linear approximation;

Fig. 8 shows a preferred embodiment of a device according to the invention;

Fig. 9 shows an extension of the device of Fig. 8;

Fig. 10 shows a preferred embodiment of an error corrector for the device of Fig. 8 and 9; and

Fig. 11 shows an advantageous extension of the error corrector of Fig. 10.

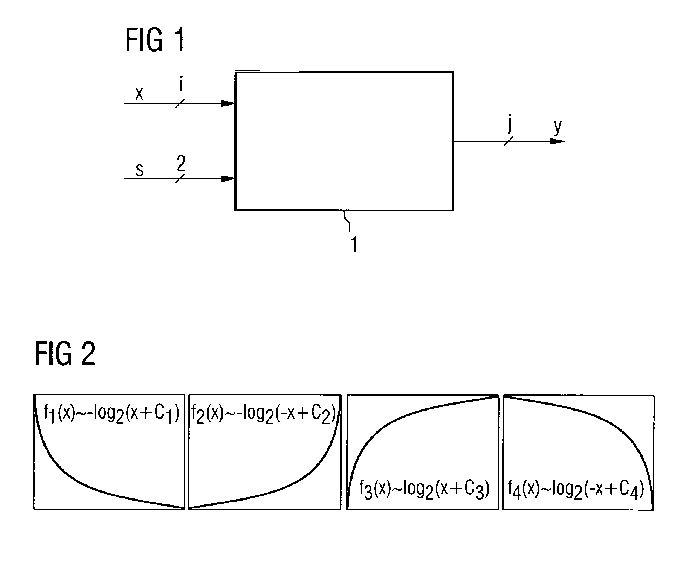

Fig. 1 shows a device for computing the logarithm of a value to the base of 2. The device comprises a first input for an input value x of a width i and a second input for a select signal s. The device further comprises an output for an output value y of a width j which is the logarithmized value of the input value x. The select signal s is a two-bit signal for selecting one logarithmic function of several logarithmic functions that are used for computing the logarithm. In the present invention x and y are positive integers ($N_0^+ \rightarrow N_0^+$) and are not limited to any specific length.

Fig. 2 shows four different analog logarithmic functions that may be used in the device of Fig. 1 for computing the logarithm of a value. The logarithmic functions $f_1$, $f_2$, $f_3$, and $f_4$ are selected in dependence on the input value x and the result of the logarithmization. The logarithmic functions map positive input values $x \in N_0^+$ onto positive output values $y \in N_0^+$ and can be described by the following equations. Therein $A_n$, $B_n$ and $C_n$ are positive coefficients which map and scale the corresponding x,y range of the curves to the upper right quadrant of the Cartesian coordinate system so that both x and $y = f_n(x)$ remain positive.

$$f_1(x) = A_1 - B_1 \cdot \log_2(x + C_1) \tag{1}$$

$$f_2(x) = A_2 - B_2 \cdot \log_2(-x + C_2) \tag{2}$$

$$f_3(x) = A_3 + B_3 \cdot \log_2(x + C_3) \tag{3}$$

$$f_4(x) = A_4 + B_4 \cdot \log_2(-x + C_4) \tag{4}$$

In the device of Fig. 1 a piecewise linear approximation of each corresponding logarithmic function is performed in dependence on the width i of the input value x. The linear approximation or linearization is based on the Taylor/Mac Laurin series of the natural logarithm truncated after the first order:

$$-\log_2(1 + x) = \frac{1}{\ln 2} \cdot \sum_{n=1}^{\infty} (-1)^n \cdot \frac{x^n}{n} \approx -\frac{x}{\ln 2} \tag{5}$$

This formula is valid in the range of values between -1 and +1, whereas the linear approximation is accurate only around the origin. For improving the accuracy the range of values is split into domains or intervals and a linear approximation is performed in each interval.

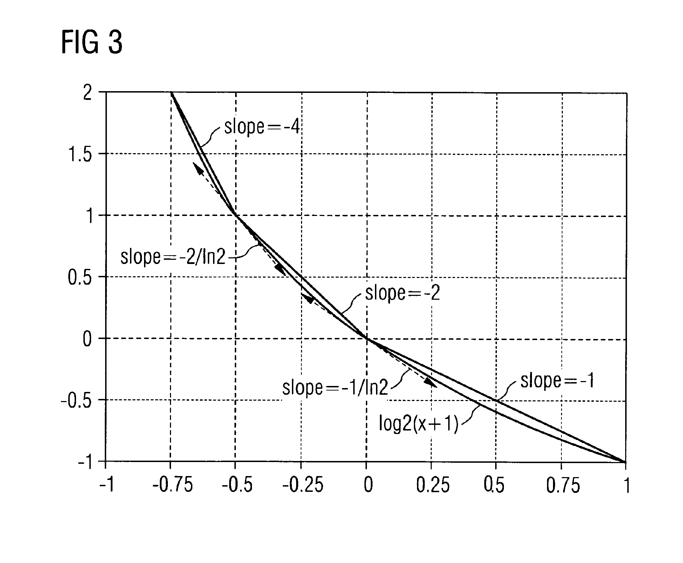

Fig. 3 shows the logarithmic function $\log_2(1+x)$ and the piecewise linear approximation of the logarithmic function by straight lines in separate intervals. At selected abscissae which are a power of two (i.e. $x = 2^n$, $n \in N^+$) tangents to the curve of the logarithmic function are shown by dashed lines with arrows. The slope of each tangent to the curve of the logarithmic function is proportional to ln 2. By connecting adjacent abscissae of the selected abscissae with straight lines, we approximate the curve of the logarithmic function from its inner side with respect to the curvature. In other words, we majorate the logarithmic function $-\log_2(x + 1)$. By doing this the factor ln 2 is eliminated and straight lines whose slopes are simple integers and also powers of 2 are obtained.

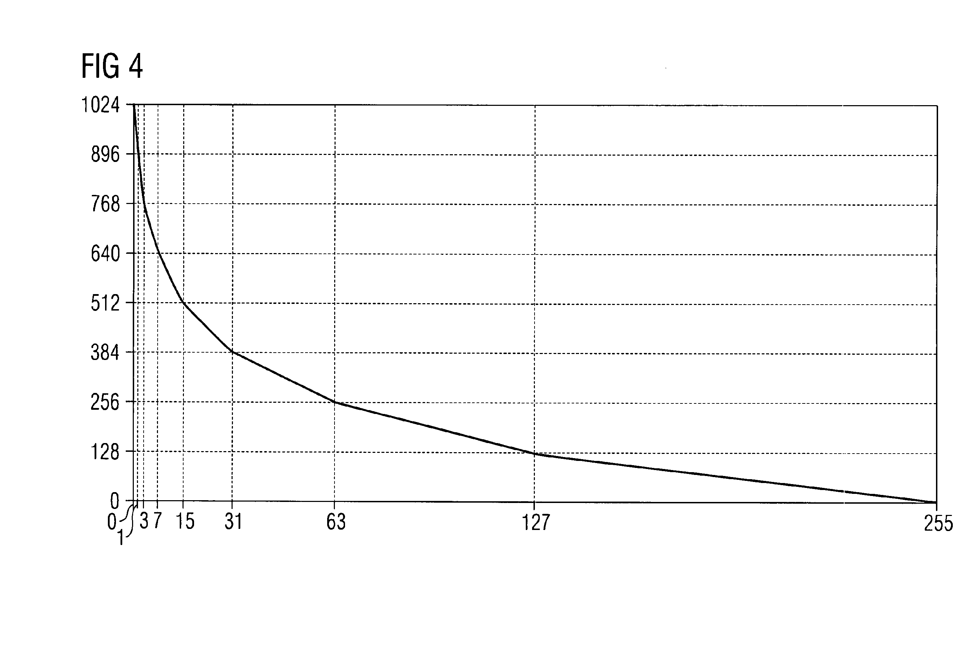

Fig. 4 shows an example of the piecewise linear approximation of the logarithmic function $f_1(x)$. Here the width i of the input value x of the logarithmic function is 8 bit. In order to approximate the logarithmic function $f_1$, the x-axis is divided into logarithmically increasing or decreasing parts and the y-axis is divided into constant equally sized parts. In this case, the x-axis and the y-axes are divided into eight intervals. The opposite corners of resulting rectangles are connected by straight lines forming eight linear segments of a non-linear function approximating the logarithmic function $f_1$.

In the following, we focus on the logarithmic function $f_1(x)$ described by equation 1. Actually, the device according to the invention each time deals with the same logarithmic function, e.g. the logarithmic function according to equation 1. The other logarithmic functions, e.g. the logarithmic functions of equations 2 to 4, due to their symmetry are obtained by vertical and/or horizontal mirroring of this same logarithmic function. This is easily seen in Fig. 2. The other logarithmic functions can be computed from one logarithmic function by simple bit inversion.

x and y are integers with respective widths i and j, where $x = [x_0, x_1, ..., x_{i-1}]$ and $y = [y_0, y_1, ..., y_{j-1}]$. Assuming that x and y are positive, they can also be represented using the corresponding binary weighting

$$x = \sum_{n=0}^{i-1} x_n \cdot 2^n, \quad y = \sum_{m=0}^{j-1} y_m \cdot 2^m \qquad (6)$$

According to the example in Fig. 4 the approximation of the logarithmic function $f_1$ is created by repeatedly cutting the remaining part of the x-axis into halves, starting in the case of $f_1$ according to equation 1 from the right to the left. This process is stopped when the length of the last interval is 1. The range of x is covered in i iteration steps, so that the maximum value of x reached is:

$$x_{max} = \sum_{n=0}^{i-1} 2^n = 2^i - 1 \qquad (7)$$

On the y-axis the range is divided into i equal intervals whose length $\Delta_y$ only depends on the width i of the input value x. This length is set to a constant equal to $\Delta_y = 2^{i-1}$ which guarantees that the slopes of the straight lines approximating the logarithmic function are simple integers and powers of 2. Since the approximation of the logarithmic function is developed one step in both and $\vec{y}$ direction per iteration, the maximum value of y is also reached in i steps:

$$y_{max} = i \cdot \Delta_y = i \cdot 2^{i-1} \qquad (8)$$

The amount j of bits needed in the output value y to output the maximum value $Y_{max}$ can be determined. The width j of the output value y is obtained using the rounding ceiling function $(\lceil x' \rceil)$ hich computes the smallest integral value not less than its argument x':

$$j = \lceil \log_2(y_{max} + 1) \rceil \qquad (9)$$

A parameter simplifying the following equations for describing the piecewise linear approximation of the logarithmic function and therefore allowing a better understanding thereof is introduced. We assign to each interval of the x range the index n, beginning with 0 for the start interval. The start interval is the biggest interval and has a length equal to the sum of all other intervals. The index n depends on the input value x according to the approximated function, $f_1(x)$ to $f_4(x)$. For $f_1(x)$ one obtains:

$$n = \lfloor i - \log_2(x + 1) \rfloor = i - \lceil \log_2(x + 1) \rceil \quad (10)$$

where the floor function $(\lfloor x' \rfloor)$ computes the largest integral value not greater than its argument x'. Inside each interval a straight line is generated which can be calculated with the parametric equation:

$$y_{n,i}(x) = -2^n \cdot (x + 1) + \Delta_y \cdot (n + 2) \quad (11)$$

where i is included in $\Delta_y$. This equation of type $y(x) = a \cdot x + b$ describes a straight line whose slope depending on the considered logarithmic function is equal to $\pm 2^n$. To be more precise, the slope of the straight lines approximating the logarithmic functions is either $+2^n$ for $f_2(x)$ and $f_3(x)$ or $-2^n$ for $f_1(x)$ and $f_4(x)$.

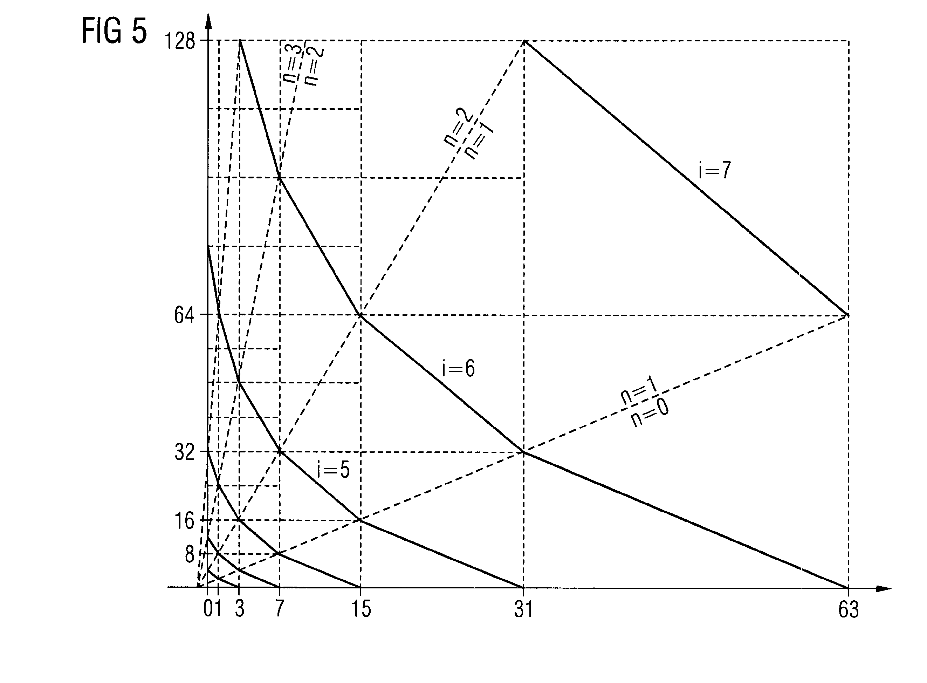

Fig. 5 shows the piecewise linear approximation of the logarithmic function $f_1(x)$ for different values of i from 1 to 7. When i increases, the amount n of segments or intervals composing the piecewise linear approximation of the logarithmic function increases respectively. As a result, each non-linear function approximating the logarithmic function is dilated from the previous one with a factor of two per added bit in x. The dilation center is located at (x = -1; y = - 0), and for each value of i, all segments carrying the same index n, when they exist, are parallel.

In the following the error made in the piecewise linear approximation of the logarithmic function is discussed by comparing the approximating non-linear function with its corresponding analog logarithmic function. According to the example in Fig. 4 and according to equation 1, the logarithmic function $f_1(x)$ is recovered by replacing n in the generic equation 11 with a continuous value, i.e. without the rounding ceiling function. The only remaining parameter is the width i of the input value x:

$$f_1(x) = 2^{i-1} \cdot (i - \log_2(x + 1)) \quad (12)$$

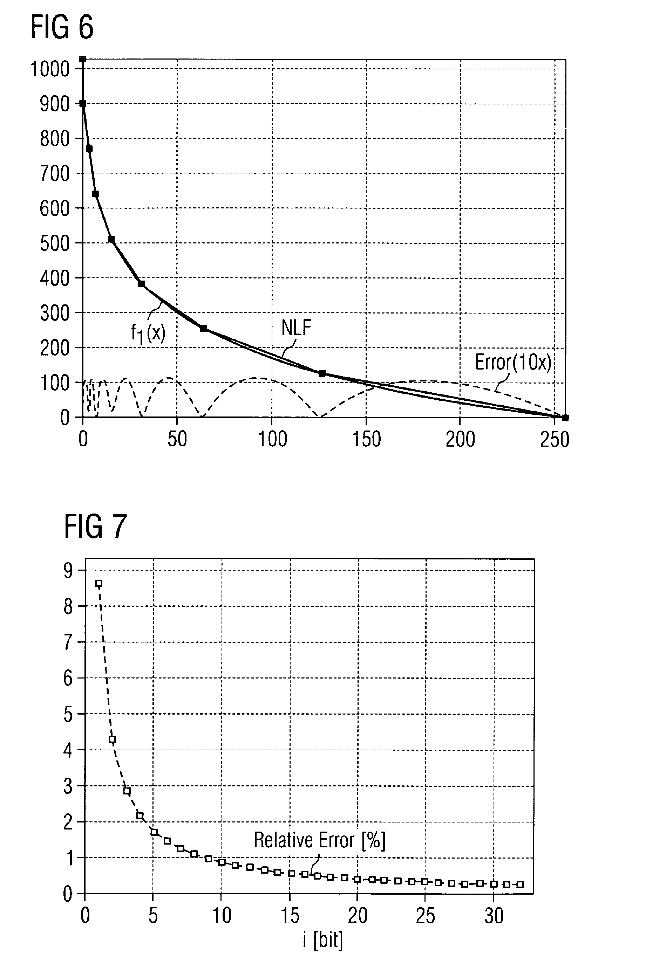

Fig. 6 shows the analog logarithmic function $f_1(x)$ in comparison to the non-linear function approximating the logarithmic function. Fig. 6 further shows the absolute error for an 8-bit input value x. The squares in Fig. 6 are the basis points of the non-linear function. They are the extremities of the segments described in Fig. 4 or 5 and are common to both functions. Since the analog logarithmic function is located under the non-linear function, the error can be estimated with the following equation:

$$y_{n,i}(x) - f_1 = 2^{i-1} \cdot (\log_2(x + 1) + n + 2 - i) - 2^n \cdot (x + 1) \quad (13)$$

As shown in Fig. 6, the absolute error function, which is here magnified with a factor 10, respectively comprises one local maximum between two basis points. The maxima can be found by differentiating the function in equation 13:

$$\frac{d}{dx}\left[y_{n,i}(x) - f_1(x)\right] = \frac{2^{i-1}}{\ln 2 \cdot (x + 1)} - 2^n \quad (14)$$

$$\text{maxima:} \quad x_m = \frac{2^{i-n-1}}{\ln 2} - 1 \tag{15}$$

In these equations x, i and n are related to each other as specified in equation 10. The number of maxima is equal to the width i of the input value x and the maxima are almost located in the middle of each interval, whereas the exact value corresponds to [1/ln2 - 1] ~ 0,44 times the length of the interval. Thus substituting the maxima $x_m$ for x in equation 13 yields a result independent of n:

$$\text{err}_{\max} = 2^{i-1} \cdot \frac{\ln 2 - \ln \ln 2 - 1}{\ln 2} \approx 2^{i-1} \cdot 0{,}086 \tag{16}$$

which explains the behavior of the absolute error in Fig. 6. The relative error in relation to the y-range ($y_{max} = i \cdot 2^{i-1}$) decreases inversely proportional to the width i of the input value x.

Fig. 7 shows the relative error made by the piecewise linear approximation depending on the width i of the input value x. The accuracy is improving with increasing width i of the input value x. The relative error in percentage terms can be estimated to $\text{err}_{rel}$ ~ 0,086/i.

In the following the piecewise linear approximation is generalized to the four logarithmic functions of equations 1 to 4. Interpreting a positive integer of width i the bits thereof are inverted as another positive integer of width i yields

$$\overline{x} = 2^i - \sum_{n=0}^{i-1} x_n \cdot 2^n - 1 = 2^i - x - 1 \tag{17}$$

Through this bit manipulation x is negated and an offset of $2^i$ - 1 which keeps x = 0 is added. $\overline{x}$ is also called the binary complement. The only restriction here is to know the width i of the input value x. This property is taken into account in generating the other logarithmic functions $f_2$, $f_3$ and $f_4$ of equations 2, 3 and 4. The following table 1 shows the values of the coefficients $A_n$, $B_n$ and $C_n$ in equations 1 to 4 based on these considerations.

Table 1

| function | An | Bn | Cn |
|----------|----|----|----|
| $f_1$ | $i \cdot 2^{i-1}$ | $2^{i-1}$ | 1 |
| $f_2$ | $i \cdot 2^{i-1}$ | $2^{i-1}$ | $2^i$ |
| $f_3$ | $2^j - i \cdot 2^{i-1} - 1$ | $2^{i-1}$ | 1 |
| $f_4$ | $2^j - i \cdot 2^{i-1} - 1$ | $2^{i-1}$ | $2^i$ |

$A_n$ is a vertical offset, $B_n$ is a scaling coefficient and $C_n$ is a horizontal offset. The four logarithmic functions are selected by a two-bit select signal s in Fig. 1. One bit of the select signal s controls the inversion of the input value x and the selection between $\pm\log_2(x)$ and $\pm\log_2(-x)$, i.e. between $f_{1,3}$ and $f_{2,4}$, whereas the other bit controls the inversion of the output value y and the selection between $+\log_2(\pm x)$ and $-\log_2(\pm x)$, i.e. between $f_{1,2}$ and $f_{3,4}$.

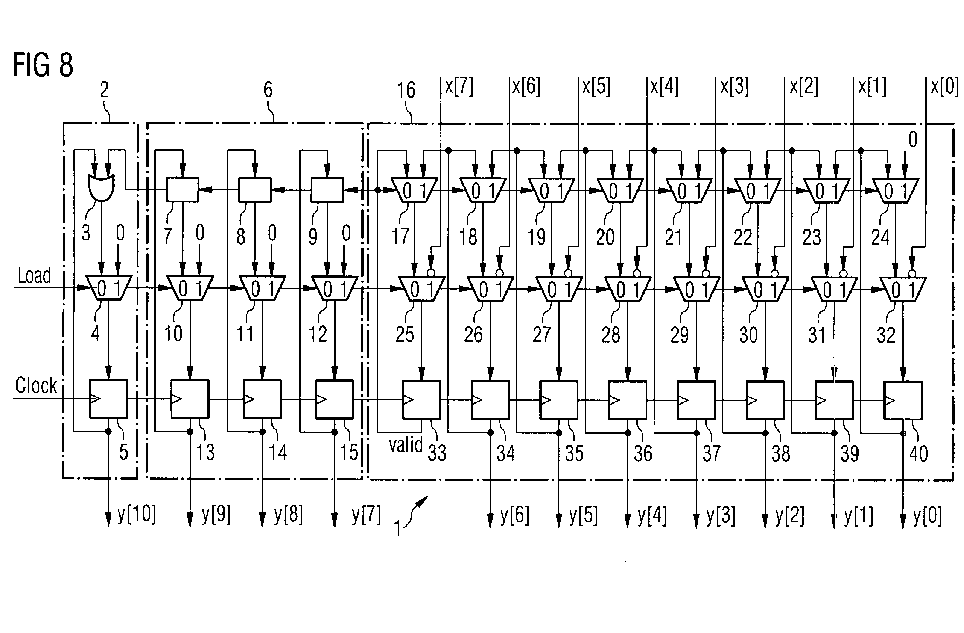

Fig. 8 shows a preferred embodiment of a device for computing the logarithm of a value to the base of 2 according to the invention. An input value x of the logarithm preferably has a width of 8 bits. The input value x may have any desired width. The embodiment is based upon a recursive structure requiring a clock signal. The device 1 comprises a memory 2 with an OR-gate 3, a multiplexer 4 and a shift register 5, a counter 6 with a plurality of half-adders 7 to 9, a row of multiplexers 10 to 12, and a row of shift registers 13 to 15, and a bit shifter 16 with a first row of multiplexers 17 to 24, a second row of multiplexers 25 to 32, and a row of shift registers 33 to 40.

In the bit shifter 16, a respective bit of the input value x is applied to a respective inverted first input of a respective multiplexer 25 to 32 of the second row of multiplexers. A respective output of a respective multiplexer 17 to 24 of the first row of multiplexers is connected to a respective second input of a multiplexer 25 to 32 of the second row of multiplexers. A respective output of a respective multiplexer 25 to 32 of the second row of multiplexers is connected to a respective input of a respective shift register 33 to 40 of the row of shift registers. A respective output of a respective shift register 34 to 40 of the row of shift registers is connected to a respective first input of a respective preceding multiplexer 17 to 23 of the first row of multiplexers and to a respective second input of a respective associated multiplexer 18 to 24 of the first row of multiplexers. The output of the first shift register 33 of the row of shift registers is only connected to the second input of its associated multiplexer 17 of the first row of multiplexers and to control inputs of all multiplexers 17 to 24 of the first row of multiplexers. The first shift register 33 of the row of shift registers provides a valid bit at its output. When the valid bit is in a high (1) state the state or signal at the first input of a multiplexer 17 to 24 is switched to the output of the respective multiplexer. When the valid bit is in a low (0) state the state or signal at the second input of a multiplexer 17 to 24 is switched to the output of the respective multiplexer. A bit with a low state (0) is applied to a first input of the last multiplexer 24 of the first row of multiplexers.

In the counter 6 of the device 1 a zero signal or bit with a low state (0) is applied to a first input of each multiplexer 10 to 12 of the row of multiplexers. A respective first output of each half-adder 7 to 9 of the plurality of half-adders is connected to a respective second input of a respective multiplexer 10 to 12 of the row of multiplexers. A respective output of each multiplexer 10 to 12 of the row of multiplexers is connected to a respective input of a respective shift register 13 to 15 of the row of shift registers. A respective output of a shift register 13 to 15 of the row of shift registers is connected to a respective first input of a respective half-adder 7 to 9. A second output of the first half-adder 7 is connected to a first input of the OR-gate 3 in the memory 2 of the device 1. A second output of the second half-adder 8 is connected to a second input of the first half-adder 7 of the plurality of half-adders. A second output of the third half-adder 9 of the plurality of half-adders is connected to a second input of the second half-adder 8. A second input of the third half-adder 9 of the plurality of half-adders 7 to 9 is connected to the output of the first shift register 33 of the row of shift registers in the bit shifter 16 of the device 1.

In the memory 2 of the device 1, a zero signal or a bit with a low state (0) is applied to a first input of the multiplexer 5. An output of the OR-gate 3 is connected to a second input of the multiplexer 4. An output of the multiplexer 4 is connected to an input of the shift register 5. An output of the shift register 5 is connected to a second input of the OR-gate 3. In the memory 2, the counter 6, and the bit shifter 16 of the device 1, a load signal is applied to control inputs of the multiplexers 4, 10 to 12, and 25 to 32. When the load signal is in a high state (1) the signals or states of bits at the first inputs of the multiplexers 4, 10 to 12, and 25 to 32 are switched to the output of the respective multiplexer. When the load signal is in a low state (0) the signals or logical states at the second inputs of the multiplexers 4, 10 to 12, and 25 to 32 are switched to the output of the respective multiplexer. The shift registers 5, 13 to 15, and 33 to 40 in the device 1 are clocked by a clock signal applied to a clock input of each shift register. Here in the memory 2 and the counter 6 of the device 1 the outputs of the shift registers 5, and 13 to 15 provide the most significant bits 7 to 10 of the output value y. In the bit shifter 16 of the device 1 the outputs of the shift registers 34 to 40 provide the least significant bits 0 to 6 of the output value y of the device 1. The output value y is the logarithmized input value x or the result of taking the logarithm of the input value x.

Before the calculation of an output value y the multiplexers 4 10 to 12, and 25 to 32 in the memory 2, the counter 6, and the bit shifter 16 of the device 1 are initialized by the load signal. For that purpose the load signal is set to 1. For the calculation of an output value y of the logarithmic function, the device of Fig. 8 needs at most as many clock periods as there are bits i of the input value x. In the bit shifter 16, the multiplexers 17 to 24 form a sequential shifter and can shift only 1 bit at a time from the right to the left of the first row of multiplexers 17 to 24. Whether a shift is performed or not is controlled by the most significant bit (MSB) of the input value x. On the one hand, as long as this most significant bit remains 1, the bits of the input value x are shifted, as if the input value x was multiplied with 2, or $2^n$ after n iterations. This corresponds to the multiplication of x with the expression $2^n$ on the right side of equation 11. The bits of the input value x are inverted by the inverted first inputs of the multiplexers 25 to 32 of the second row of multiplexers. This corresponds to the effect of the expression (x + 1) on the right side in equation 11. In operation, the low state (0) of the bit at the first input of the last multiplexer 24 of the first row of multiplexers is shifted from the right to the left of the first row of multiplexers until it reaches the first multiplexer 17. Then the valid signal changes its state from a high state to a low state indicating, that the calculation of the output value y is finished and the bit shift operations are terminated, respectively. The counter 6 of the device 1 in Fig. 8 is a counter that counts the number of bit shifts of the input value x in the multiplexers 17 to 24 of the bit shifter 16. The counter 6 is completed by the memory 2. The memory 2 stores the carry bit of the counting result. The counter 6 over the upper bits (i to j-1) of the output value y is incremented and after n iterations yields the offset $n \cdot 2^{i-1}$ according to the right addend on the right side of equation 11. The final result of the output value y is formed by the concatenation of the two values obtained in the memory 2 and the counter 6 of the device 1 and the bit shifter 16 of the device 1. Depending on the input value x, the output value y can be calculated in less than i clock periods.

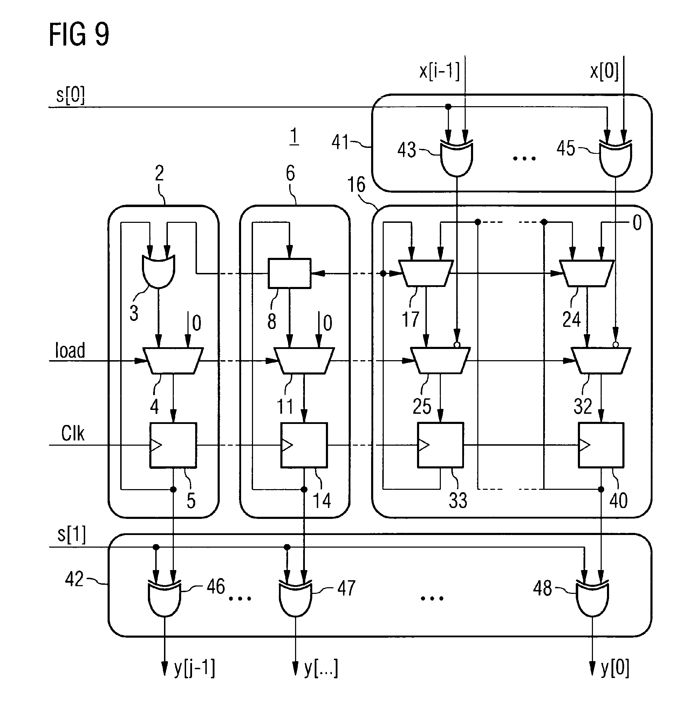

Fig. 9 shows an extension of the device 1 of Fig. 8. Therein the device 1 further includes a first and second bit inverter 41 and 42. The first bit inverter 41 comprises a row of EXCLUSIVE-OR (XOR) gates 43 to 45, and the second bit inverter 42 comprises a row of XOR gates 46 to 48. The number of XOR gates 43 to 45 in the first bit inverter 42 of the device 1 corresponds to the width i of the input value x. The number of XOR gates 46 to 48 in the second bit inverter 42 of the device 1 corresponds to the width j of the output value Y.

In the first bit inverter 41 of the device 1, the first bit s[0] of the select signal s of Fig. 1 is applied to a first input of each XOR gate 43 to 45. A respective bit of the input value x is applied to a respective second input of a respective XOR gate 43 to 45. In contrast to the device 1 of Fig. 8, a respective output of a XOR gate 43 to 45 of the row of XOR gates is connected to a respective inverted first input of a respective multiplexer 25 to 32 of the second row of multiplexers in the bit shifter 16 of the device 1.

In the second bit inverter 42 of the device 1, the second bit s[1] of the select signal s of Fig. 1 is applied to a first input of each XOR gate 46 to 48 of the row of XOR gates. A respective output of a respective shift register 5, 13 to 15, and 33 to 40 of the shift registers in the memory 2, the counter 6, and the bit shifter 16 of the device 1 is connected to a respective second input of a respective XOR gate 46 to 48 of the row of XOR gates. The outputs of the XOR gates 46 to 48 are the outputs of the device 1 for the output value y. Therefore, a respective bit of the output value y of the device 1 is provided at a respective output of a respective XOR gate 46 to 48.

The XOR gates 43 to 45, and 46 to 48 in the first and second bit inverter 41 and 42 of the device 1 may according to the select signal s invert the bits in the input value x and the output value y to choose between $f_1$ to $f_4$. The select signal s must be set at the same time as the input value x. The extension of Fig. 9 realizes the mirroring operation or bit manipulation described in equation 17. The XOR gates preferably are CMOS inverters. The devices of Fig. 8 and 9 can be generalized for any width i of an input value x and adapted to the four logarithmic functions described in equations 1 to 4 by the extension of Fig. 9.

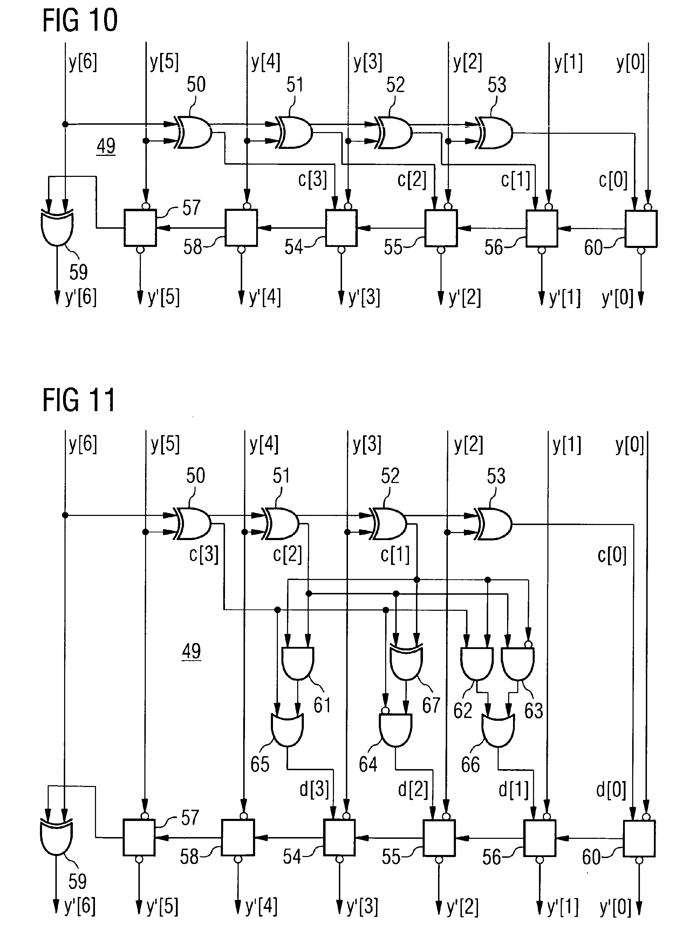

Fig. 10 shows a preferred embodiment of an error corrector 49 for the device 1 of Fig. 8 and 9. The error corrector 49 corrects errors in the output value y and provides a corrected output value y'. The error corrector 49 comprises a row of XOR gates 50 to 53, a row of full-adders 54 to 56, a row of half-adders 57 and 58, a further XOR gate 59, and a further half-adder 60. The outputs in the bit shifter 16 of the device 1 in Fig. 8 and 9 for the bits 0 to 6 of the output value y are connected to respective inputs of the error corrector 49. The most significant bit (6) thereof is applied to a respective first input of each XOR gate 50 to 53 of the row of XOR gates and to a first input of the further XOR gate 59. A respective bit of the bits 2 to 5 of the output value y is respectively applied to a respective second input of each XOR gate 50 to 53 of the row of XOR gates. Outputs of the XOR gates 50 to 53 provide bits of a correction signal c. A respective bit of the bits 1 to 3 of the correction signal c is applied to a respective first input of a respective full-adder 54 to 56 of the row of full-adders. The bit 0 of the correction signal c is applied to a first input of the further half-adder 60. The bit 0 of the output value y is applied to an inverted second input of the further half-adder 60. A respective bit of the bits 1 to 3 of the output value y is applied to a respective inverted second input of a respective full-adder 54 to 56 of the row of full-adders. A respective bit of the bits 4 to 5 of the output value y is applied to a respective inverted input of a respective half-adder 57 and 58 of the row of half-adders. A first output of the further half-adder 60 is connected to a third input of the full-adder 56. A first output of the full-adder 56 is connected to a third input of the full-adder 55. A first output of the full-adder 55 is connected to a third input of the full-adder 54. A first output of the full-adder 54 is connected to a second input of the half-adder 58. A first output of the half-adder 58 is connected to a second input of the half-adder 57. A first output of the half-adder 57 is connected to a second input of the further XOR gate 59. The bit 0 of a corrected output value y' is provided at a second inverted output of the further half-adder 60. The bits 1 to 3 of the corrected output value y' are provided at respective second inverted outputs of the full-adders 54 to 56 of the row of full-adders. The bits 4 and 5 of the corrected output value y' are provided at second inverted outputs of the half-adders 57 and 58 of the row of half-adders. The most significant bit or the bit 6 of the corrected output value y' is provided at an output of the further XOR gate. Each half-adder 57, 58, and 60 adds the signals at its respective first and second input. Each full-adder 54 to 56 adds the signals at its respective first, second and third input. The adders provide the result of the addition at their respective inverted first or second outputs.

Approximating a logarithm function through straight lines yields an arch shaped error as already shown in Fig. 6. This error is always positive and influences the i-1 least significant bits of the output value y. In the embodiment of the error corrector in Fig. 10 these bits are the bits 0 to 6 of the output value y. This is the reason why the j-i most significant bits of the output value y pass through the error corrector 49 in Fig. 10 and remain unchanged after a correction. In the embodiment of the error corrector in Fig. 10 these bits are the bits 7 to 10 of the output value y. In the error corrector 49 an approximation of the error within the interval between two basis points is subtracted. The correction is calculated in such a way that it can not affect the bits whose indices are bigger than i-1, otherwise an unsupported overflow would occur in the subtractor formed of the half-adders 57 and 58, the full-adders 54 to 56 and the further half-adder 60. To generate a correcting value with a minimal number of gates, the XOR gates 50 to 53 controlled by the bit 6 of the output value create a symmetrical distribution of the four lower bits (c[0] to c[3]) of the correction signal c which are subtracted from the output value y after being divided by 4 through bit shifting by two bits to the right. As a result, the error made is 2,5 times smaller than without correction. The error corrector reduces the error up to a factor 4,6 with only a few supplementary logic gates and a subtractor.

Fig. 11 shows an advantageous extension of the error corrector 49 of Fig. 10. The error corrector 49 is now based on a look-up table (LUT). The error corrector 49 compared to the error corrector 49 of Fig. 10 further comprises a logic circuit arranged between the outputs of the XOR gates 50 to 53 of the row of XOR gates and the first inputs of the full-adders 54 to 56 of the row of full-adders. The logic circuit comprises four AND gates 61 to 64, two OR gates 65 and 66, and one XOR gate 67 which are arranged according to the following logical equations

$$d[3] = c[3] + c[2] \cdot c[1] \tag{18}$$

$$d[2] = \overline{c[3]} \cdot (c[2] \oplus c[1]) \tag{19}$$

$$d[1] = c[3] \cdot c[1] + c[2] \cdot \overline{c[1]} \tag{20}$$

$$d[0] = c[0] \tag{21}$$

d is the output signal or modified correction signal of the logic circuit. The output of the XOR gate 50 is connected to a first input of the AND gate 62, an inverted first input of the AND gate 64, and a first input of the OR gate 65. The output of the XOR gate 51 is connected to a first input of the AND gate 61, a first input of the XOR gate 67, and a first input of the AND gate 63. The output of the XOR gate 52 is connected to a respective second input of the AND gates 61 and 62, a second input of the XOR gate 67, and an inverted second input of the AND gate 63. The output of the XOR gate 53 is still connected to the first input of the further half-adder 60. An output of the AND gate 61 is connected to a second input of the OR gate 65. An output of the XOR gate 67 is connected to a second input of the AND gate 64. An output of the AND gate 62 is connected to a first input of the OR gate 66. An output of the AND gate 63 is connected to a second input of the OR gate 66. An output of the OR gate 65 is connected to the first input of the full-adder 54. An output of the AND gate 64 is connected to the first input of the full-adder 55. An output of the OR gate 66 is connected to the first input of the full-adder 56.

The error corrector 49 of Fig. 11 symmetrically approximates the arch shaped error over the modified 4-bit correction signal d which is then subtracted in the subtractor formed of the half-adders 57 and 58, the full-adders 54 to 56 and the further half-adder 60 from the output value y to provide a corrected output value y'. Compared to the devices of Fig. 8 and 9 without any correction, the remaining error is here 4,6 times smaller.

The device according to the invention is made of a very simple sequential logic. Its size varies proportionally to i and the gate delays remain constant between the registers. The device according to the invention is suitable for search engines used for databases. These search engines are processing search algorithms in which logarithms need to be computed.

**Claims**

1. A device (1) for computing the logarithm of a binary input value (x) to the base of 2, wherein a range of input values (x) of a logarithmic function of the logarithm is subdivided into a plurality of intervals, and the device in a respective interval computes an output value (y) of the logarithm based on an approximation of the logarithmic function by a respective straight line, and wherein in each interval (n) a straight line is described by the equation $y_{n,i}(x) = -2^n \cdot (x + 1) + 2^{i-1} \cdot (n + 2)$ in dependence on the number of bits i of the input value (x), comprising:

   - a bit shifter (16) for inverting bits of said input value (x) and for shifting said bits of said input value (x) n positions to the left; and
   - a counter (2, 6) for generating an offset $+ 2^{i-1} \cdot (n + 2)$ of said input value (x) within n counting cycles; wherein
   - said bit shifter (16) outputs the i-2 least significant bits of said output value (y), and said counter (2, 6) outputs the upper bits of said output value (y).

**2.** The device (1) according to claim 1,
**characterized in that**

- said bit shifter (16) is a serial bit shifter, and said shifting of said bit shifter (16) and said counting cycles of said counter (2, 6) are controlled by a clock signal.

**3.** The device (1) according to claim 1 or 2,
**characterized in that**

- said bit shifter (16) comprises a row of multiplexers (17, 18, 19, 20, 21, 22, 23, 24) with a feedback.

**4.** The device (1) according to claim 1, 2 or 3,
**characterized in that**

- said device (1) further comprises:

- a first bit inverter (41) for inverting said bits of said input value (x); and
- a second bit inverter (42) for inverting said bits of said output value (y); wherein

- said first bit inverter (41) and said second bit inverter (42) invert said bits in dependence on a selection signal (s) indicating a logarithmic function ($f_1$, $f_2$, $f_3$, $f_4$) used for computing the logarithm.

**5.** The device (1) according to claim 4,
**characterized in that**

- said first bit inverter (41) and said second bit inverter (42) comprise EXLUSIVE-OR gates.

**6.** The device (1) according to one of the preceding claims,
**characterized in that**

- said device (1) further comprises an error corrector (49) for correcting the error caused by said approximation of said logarithmic function.

FIG 1

FIG 2

$$f_1(x) \sim -\log_2(x + C_1)$$ $$f_2(x) \sim -\log_2(-x + C_2)$$ $$f_3(x) \sim \log_2(x + C_3)$$ $$f_4(x) \sim \log_2(-x + C_4)$$

## FIG 3

EP 1 615 122 A1

## FIG 4

FIG 5

EP 1 615 122 A1

## FIG 6

## FIG 7

# FIG 8

EP 1 615 122 A1

# FIG 9

## FIG 10

## FIG 11

European Patent
Office

## EUROPEAN SEARCH REPORT

Application Number

EP 04 01 6025

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | LAYER C ET AL: "A scalable compact architecture for the computation of integer binary logarithms through linear approximation" CIRCUITS AND SYSTEMS, 2004. ISCAS '04. PROCEEDINGS OF THE 2004 INTERNATIONAL SYMPOSIUM ON VANCOUVER, BC, CANADA 23-26 MAY 2004, PISCATAWAY, NJ, USA,IEEE, US, 23 May 2004 (2004-05-23), pages 421-424, XP010720195 ISBN: 0-7803-8251-X * paragraph [0003] * | 1-6 | G06F7/566 |
| A | EP 0 323 595 A (DUERRWAECHTER E DR DODUCO) 12 July 1989 (1989-07-12) * column 2, line 30 - column 3, line 20 * | 4,5 | |
| A | US 4 718 030 A (TSUTSUMI KENICHI) 5 January 1988 (1988-01-05) * abstract * | 4,5 | |

TECHNICAL FIELDS
SEARCHED (Int.Cl.7)

G06F

The present search report has been drawn up for all claims

| Place of search | Date of completion of the search | Examiner |
|---|---|---|
| The Hague | 22 October 2004 | Cohen, B |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 04 01 6025

This annex lists the patent family members relating to the patent documents cited in  the above-mentioned European search report.
The members are as contained in the European Patent Office EDP file on
The European Patent Office is in no way liable for these particulars which are merely  given for the purpose of information.

22-10-2004

| Patent document cited in search report | | Publication date | Patent family member(s) | | Publication date |
|---|---|---|---|---|---|
| EP 0323595 | A | 12-07-1989 | DE | 3800141 A1 | 20-07-1989 |
| | | | DE | 3853670 D1 | 01-06-1995 |
| | | | EP | 0323595 A2 | 12-07-1989 |
| | | | ES | 2072258 T3 | 16-07-1995 |
| US 4718030 | A | 05-01-1988 | JP | 1903181 C | 08-02-1995 |
| | | | JP | 6031990 B | 27-04-1994 |
| | | | JP | 60144798 A | 31-07-1985 |
| | | | DE | 3500316 A1 | 25-07-1985 |
| | | | GB | 2152715 A ,B | 07-08-1985 |

EPO FORM P0459

For more details about this annex : see Official Journal of the European Patent Office, No. 12/82